# EUROPEAN PATENT SPECIFICATION

(11) **EP 3 181 628 B1**
(45) Date of publication and mention of the grant of the patent: **05.09.2018**
(21) Application number: 16203582.8
(22) Date of filing: 13.12.2016
(51) Int. Cl.: C08K 5/13, B60C 1/00

(54) **ANTI-AGING AGENTS FOR RUBBER COMPOUNDS**
ALTERUNGSSCHUTZMITTEL FÜR KAUTSCHUKMISCHUNGEN
AGENTS ANTI-VEILLISSEMENT POUR COMPOSÉS DE CAOUTCHOUC

(30) Priority: 15.12.2015 IT UB20159548
(43) Date of publication of application: 21.06.2017
(73) Proprietor: Bridgestone Corporation, Tokyo 104-8340 (JP)
(72) Inventor: HOUSE, JOHN NAZARENO, 00128 Roma (IT); MANCINI, GIOVANNA, 00015 Montelibretti (RM) (IT); MAZZONNA, MARCO, 00015 Montelibretti (RM) (IT)
(74) Representative: Marchetti, Alessio

(56) References cited:
- WO-A1-2015/063703
- CN-A- 104 447 228
- DE-A1-102009 029 163
- US-A1- 2006 078 633

## Description

The present invention relates to new anti-aging agents for polymer products.

In particular, the invention finds advantageous application in rubber products, and preferably, in the tyre industry, to which the description will make explicit reference without loss of generality.

As is known, rubber compounds that are produced in order to prepare the various parts of the tyre envisage the use of anti-aging agents to avoid degradation of the rubber due to the reaction of the polymer base with oxygen and/or ozone.

Anti-aging agents are materials that are added to compounds that are susceptible to oxidation, such as rubbers, in order to inhibit or slow the oxidation processes (being themselves oxidized). In other words, anti-aging agents are materials capable of reacting with atmospheric agents, avoiding, therefore, their reacting with the polymer base.

The compound concentration of the anti-aging agents depends upon the level of exposure to the atmosphere and the conditions of temperature and mechanical stress affecting the specific part of the tyre to which the compound refers.

The anti-aging agents most commonly used belong to the family of paraphenylenediamines (PPD), such as for example N-1,3-dimethylbutyl-N'-phenyl-paraphenylenediamine (6PPD), N,N'-diphenyl-p-phenylenediamine (DPPD), or else phenol derivatives such as 2,6-Di-tert-butyl-4-methylphenol (BHT), or belonging to the vitamin E family, such as for example α-tocopherol, α-tocotrienol, γ-tocopherol, γ-tocotrienol, or to the quinoline family, such as for example Poly(1,2-dihydro-2,2,4-trimethylquinoline) (TMQ).

In the past the Applicant has found that a particular class of compounds deriving from trans-stilbene represented a viable alternative to known anti-aging agents. This particular class of anti-aging agents has been described and claimed in patent applications RM2013A000596 and RM2013A000597.

In continuing its research, the Applicant has selected two specific compounds that belong to a particular class of compounds deriving from trans-stilbene and that have an anti-aging activity that is superior to that of the specific compounds already described and claimed in patent applications RM2013A000596 and RM2013A000597.

The object of the present invention is the use, as an anti-aging agent in rubber compounds, of a compound of general formula (I) 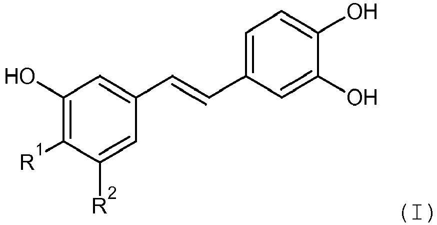 wherein the substituents are chosen from the following two combinations:
a) R¹ is H; R² is OH;
b) R¹ is OH; R² is H.

Another object of the present invention is a polymer compound, most preferably a rubber compound comprising at least a polymer base with a cross-linkable unsaturated chain, a vulcanization system, and an anti-aging agent chosen from the two compounds listed above.

Here and hereinafter, a vulcanization system refers to a complex of ingredients comprising at least sulfur and accelerator compounds, which in the preparation of the compound are added in a final mixing stage and have the purpose of promoting the vulcanization of the polymer base once the compound is subjected to a vulcanization temperature. Here and hereinafter, the term "polymer base with a cross-linkable unsaturated chain" refers to any natural or synthetic non-cross-linked polymer capable of assuming all of the chemical-physical and mechanical characteristics typically assumed by elastomers after cross-linking (vulcanization) with sulfur-based systems.

A still further object of the present invention is a a tyre part made with a rubber compound comprising an anti-aging agent chosen from the two compounds above.

A still further object of the present invention is a tyre comprising a part as defined above.

For reasons of clarity, the structure of the two anti-aging agents of the present invention is reported below.

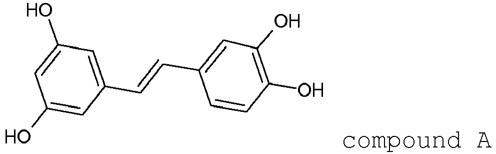

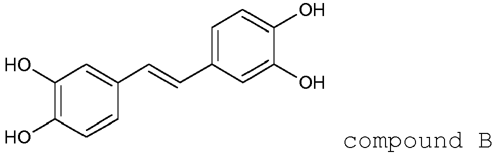

Being a new compound, compound B, in addition to being claimed for its use as an anti-aging agent, is also claimed as compound in and of itself.

For a better understanding of the invention, the following are given as purely illustrative and non-limiting embodiments thereof.

### EXAMPLES

The Applicant has tested the anti-aging capacity compared to rubber, both of the two compounds A and B as described above and, for the sake of comparison, of three other compounds (Comp.1, Comp.2, Comp.3) specifically described and claimed in patent applications RM2013A000596 and RM2013A000597.

For reasons of clarity, the structures of the three anti-aging agents Comp.1, Comp.2, Comp.3 already described in the prior art are listed below.

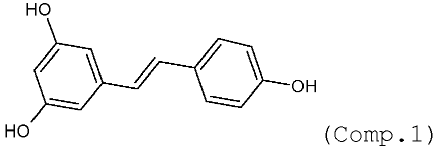

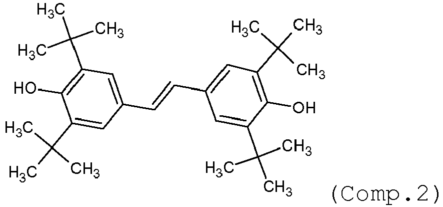

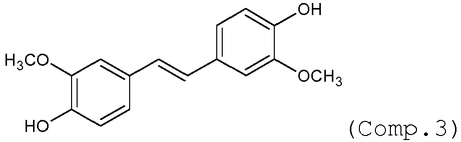

### - Anti-aging testing -

To test the anti-aging capacity compared to the rubber of the test compounds, an experimental method was prepared based upon gas chromatography, wherein a model compound (Model Compound, MC), in this case cumene, replaces the elastomer. The phenomenon of oxidation-reduction performed by the cumene was activated by a radical initiator (azobisisobutyronitrile) and evaluated at a controlled temperature equal to 140°C and in the presence of an excess of oxygen.

The composition used for the tests described above is: Cumene 3 ml; n-decane 1.5 ml; azobisisobutyronitrile 20 mg.

After obtaining the conditions referred to above, a quantity of the compound was sampled in order to verify by gas chromatography the quantity of cumene consumed due to the reaction with the oxygen.

The oxidation test described above was performed both in the absence and in the presence of an anti-aging agent.

In particular, six oxidation tests were performed: without an anti-aging agent; with 0.4*10⁻² m Comp.1; with 0.4*10⁻² m Comp.2; with 0.4*10⁻² m Comp.3; with 0.4*10⁻² m of compound A; with 0.4*10⁻² m of compound B.

The oxidation tests were performed according to the conditions described above. For each oxidation test, 0.1 ml of the compound was sampled at 0, 2, 4, 6 and 8 hours after obtaining the test conditions described above. A gas chromatography analysis was performed on each sample in order to estimate the amount of residual cumene following the oxidation reaction.

Table I shows the amounts of cumene detected during the oxidation tests depending upon the anti-aging agent used and the sampling time interval. The amounts of cumene are expressed in terms of % of residual cumene compared to the initial amount of cumene. The measurement is made possible using n-decane as the reference standard.

**TABLE I**

| | 0 h | 2 h | 4 h | 6 h | 8 h |
|---|---|---|---|---|---|
| No anti-aging agent | 100 | 96 | 93 | 92 | 90 |
| Comp.1 | 100 | 96 | 94 | 94 | 92 |
| Comp.2 | 100 | 99 | 94 | 82 | 81 |
| Comp.3 | 100 | 99 | 98 | 97 | 94 |
| Compound A | 100 | 99 | 98 | 96 | 96 |
| Compound B | 100 | 99 | 98 | 96 | 96 |

The higher the percentage of residual cumene, the higher the antioxidant strength of the compound used.

The values given in Table I show how the compounds A and B, which are the object of the present invention, have superior anti-aging strength than the other compounds considered for comparison.

In fact, the cumene values detected for those compounds comprising the anti-aging agents, which are the object of the present invention, are higher than the corresponding values detected for those compounds comprising the comparison anti-aging agents.

In particular, it should be pointed out that the high-temperature oxidation tests were performed in order to verify the antioxidant and antiozonant strength of the compounds, which are the object of the present invention, under particularly unfavorable conditions.

To obtain further verification of the effectiveness of the anti-aging agents of the present invention, tests were performed using compounds whose formulation is characteristic of compounds for tyre parts.

Five rubber compounds were prepared (COMPOUNDS I-V) whose compositions in phr are shown in Table II.

**TABLE II**

| COMPOUND | I | II | III | IX | V |
|---|---|---|---|---|---|
| BR | 60 | | | | |
| NR | 40 | | | | |
| CB | 30 | | | | |
| SULFUR | 1.5 | | | | |
| TBBS | 0.8 | | | | |
| STEARIC ACID | 2 | | | | |
| ZnO | 3 | | | | |
| 6PPD | -- | 1.5 | -- | -- | -- |
| Comp.2 | -- | -- | 1.5 | -- | -- |
| Comp.3 | -- | -- | -- | 1.5 | -- |
| Compound B | -- | -- | -- | -- | 1.5 |

Compounds I-V were prepared according to the standard method listed below:

### (1st mixing step)

Before the start of the mixing, a mixer with tangential rotors and an internal volume of between 230 and 270 liters was loaded with the polymer base, the carbon black and the antioxidant agent reaching a fill factor of 66-72%.

The mixer was operated at a speed of 40-60 rpm, and the mixture thus formed was removed once a temperature of 145-165°C had been reached.

### (2nd mixing step)

The mixture from the previous step was reworked in the mixer operating at a speed of 40-60 rpm and subsequently removed once a temperature of 130-150°C had been reached.

### (3rd mixing step)

Added to the mixture from the previous step were stearic acid and the vulcanization system composed of sulfur, accelerators and zinc oxide reaching a fill factor of 63-67%.

The mixer was operated at a speed of 20-40 rpm, and the mixture thus formed was removed once a temperature of 100-110°C had been reached.

The compounds listed in Table II were tested in order to evaluate their mechanical properties.

The mechanical properties were measured in accordance with the ASTM D412C standard.

In particular the property relating to the M300 modulus was measured.

The M300 modulus was measured using samples both before and after (3 and 6 days) an aging process that involves keeping the samples themselves in an oven at 70°C pursuant to the ISO 188 standard.

Table III shows the results relating to the M300 modulus for the examples listed above.

For more immediate evidence of the benefits relating to the compound of the present invention, the values obtained from the tests are listed in indexed form against the results obtained from the individual compounds before they were subjected to the aging process.

**TABLE III**

| Compound | I | II | III | IX | V |
|---|---|---|---|---|---|
| 0 days | 100 | 100 | 100 | 100 | 100 |
| 3 days | 65 | 74 | 73 | 77 | 79 |
| 6 days | 27 | 74 | 72 | 74 | 76 |

As can be seen from the values given in Table III, the use of the anti-aging agents of the present invention in compound form is capable over time of guaranteeing better retention of the mechanical properties than can be observed both with those anti-aging agents commonly used (Compound II) and with those anti-aging agents already described in patent applications RM2013A000596 and RM2013A000597 (Compounds III and IV).

## Claims

1. A use, as an anti-aging agent in rubber compounds, of a compound of general formula (I) 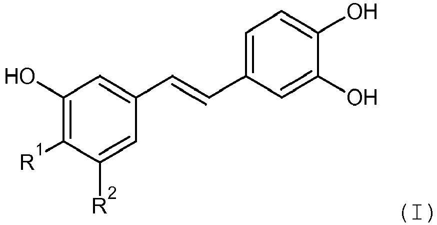 wherein the substituents are chosen from the following two combinations:
a) R¹ is H; R² is OH;
b) R¹ is OH; R² is H.

2. A compound comprising at least one polymer base with a cross-linkable unsaturated chain, a vulcanization system, and an anti-aging agent of formula (I) 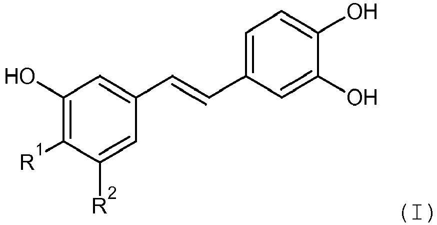 wherein the substituents are chosen from the following two combinations:
a) R¹ is H; R² is OH;
b) R¹ is OH; R² is H.

3. A polymer compound as claimed in Claim 2, **characterized by** being a rubber compound.

4. A tyre part, **characterized by** being made from a compound as claimed in Claim 3.

5. A tyre, **characterized by** comprising a part as claimed in Claim 4.

## Patentansprüche

1. Verwendung, als Alterungsschutzmittel in Gummimischungen, einer Verbindung der allgemeinen Formel (I) 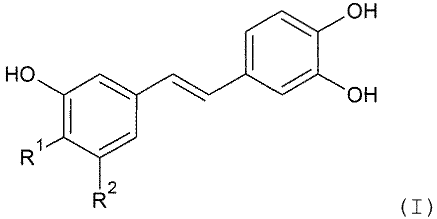 worin die Substituenten aus den folgenden zwei Kombinationen ausgewählt sind:
a) R¹ ist H; R² ist OH;
b) R¹ ist OH; R² ist H.

2. Mischung, umfassend mindestens eine Polymerbasis mit einer vernetzbaren ungesättigten Kette, ein Vulkanisierungssystem und ein Alterungsschutzmittel der Formel (I) 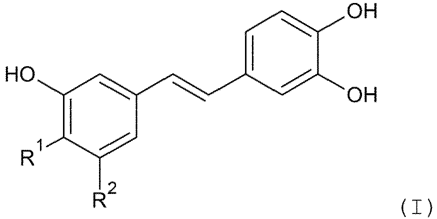 worin die Substituenten aus den folgenden zwei Kombinationen ausgewählt sind:
a) R¹ ist H; R² ist OH;
b) R¹ ist OH; R² ist H.

3. Polymermischung nach Anspruch 2, **dadurch gekennzeichnet, dass** sie eine Gummimischung ist.

4. Reifenteil, **dadurch gekennzeichnet, dass** es aus einer Mischung nach Anspruch 3 hergestellt ist.

5. Reifen, **dadurch gekennzeichnet, dass** er ein Teil nach Anspruch 4 umfasst.

## Revendications

1. Utilisation, en tant qu'agent anti-vieillissement dans des composés de caoutchouc, d'un composé de formule générale (I) 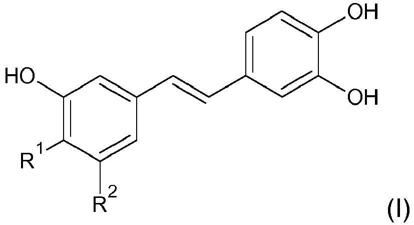 dans laquelle les substituants sont choisis parmi les deux combinaisons suivantes :
a) R¹ est H ; R² est OH ;
b) R¹ est OH ; R² est H.

2. Composé comprenant au moins une base polymère avec une chaîne insaturée réticulable, un système de vulcanisation et un agent anti-vieillissement de formule (I) 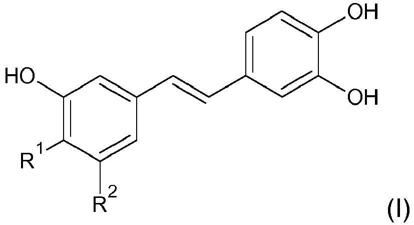 dans laquelle les substituants sont choisis parmi les deux combinaisons suivantes :
a) R¹ est H ; R² est OH ;
b) R¹ est OH ; R² est H.

3. Composé polymère selon la revendication 2, **caractérisé en ce qu'**il s'agit d'un composé de caoutchouc.

4. Partie de pneumatique, **caractérisée en ce qu'**elle est fabriquée à partir d'un composé selon la revendication 3.

5. Pneumatique, **caractérisé en ce qu'il** comprend une partie selon la revendication 4.
